Europäisches Patentamt

European Patent Office

Office européen des brevets

(11) Numéro de publication: **0 493 462 B1**

# (12) FASCICULE DE BREVET EUROPEEN

(45) Date de publication de fascicule du brevet: **14.12.94** (51) Int. Cl.<sup>5</sup>: **B60C 11/10**, B60C 11/11

(21) Numéro de dépôt: **90914213.5**

(22) Date de dépôt: **17.09.90**

(86) Numéro de dépôt internationale : **PCT/FR90/00663**

(87) Numéro de publication internationale : **WO 91/04163 (04.04.91 91/08)**

---

(54) **BANDE DE ROULEMENT MUNIE D'ALVEOLES.**

---

(30) Priorité: **25.09.89 FR 8912625**

(43) Date de publication de la demande: **08.07.92 Bulletin 92/28**

(45) Mention de la délivrance du brevet: **14.12.94 Bulletin 94/50**

(84) Etats contractants désignés: **AT BE CH DE DK ES FR GB IT LI LU NL SE**

(56) Documents cités:
**FR-A- 708 976
FR-A- 1 580 205
FR-A- 2 205 422
GB-A- 2 005 200
GB-A- 2 035 924**

(73) Titulaire: **COMPAGNIE GENERALE DES ETABLISSEMENTS MICHELIN - MICHELIN & CIE
12, Cours Sablon
F-63040 Clermont-Ferrand Cédex (FR)**

(72) Inventeur: **FEVRIER, Daniel
5, rue Amable-Faucon
F-63200 Riom (FR)**

(74) Mandataire: **Devaux, Edmond-Yves et al
Michelin & Cie
Service SRK. Brevets
23, Place des Carmes
F-63040 Clermont-Ferrand Cédex (FR)**

EP 0 493 462 B1

---

Rank Xerox (UK) Business Services
(3.10/3.09/3.3.3)

## Description

La présente invention concerne la bande de roulement d'un pneumatique destiné à rouler sur du sable ou des sols sablonneux, c'est-à-dire des sols constitués d'un mélange de sable et d'un autre matériau en proportion faible.

La bande de roulement d'un tel pneumatique est généralement formée d'éléments en relief séparés les uns des autres dans le sens axial du pneumatique par des rainures longitudinales, rectilignes ou en ligne brisée, et/ou dans le sens longitudinal du pneumatique par des rainures transversales débouchant sur les bords de la bande de roulement. Ces éléments en relief sont tels qu'ils occupent dans la surface de contact entre le pneumatique et un sol dur et plan une aire comprise entre 40 % et 60 % de l'aire totale de la surface de contact, le pneumatique étant monté sur sa jante normale de service, portant la charge normale recommandée et étant gonflé à la pression normale correspondante recommandée pour un roulage sur sable.

Il est évident que les conditions de roulage préconisées pour les pneumatiques de l'espèce considérée et dans le cas de roulage sur pistes sablonneuses ou sur sable pur sont différentes des conditions préconisées dans le cas de roulage sur route : pour une charge donnée, il est connu que la pression de gonflage est abaissée, la diminution de pression de gonflage pouvant atteindre 50 % et plus de la pression recommandée pour le roulage sur route.

Malgré cet artifice, nombreuses sont encore les difficultés rencontrées par les véhicules équipés de tels pneumatiques lorsqu'ils se trouvent en présence de couches de sable d'épaisseur importante. L'invention a pour but d'augmenter l'adhérence du pneumatique sur le sable en modifiant les caractéristiques de la bande de roulement, ce pneumatique étant un pneumatique à armature de carcasse radiale et possédant une armature de sommet formée d'au moins deux nappes de fils ou câblés faisant avec la direction circonférentielle du pneumatique des angles faibles, compris entre 10° et 45°.

GB-A-2 005 200 décrit un pneumatique présentant les caractéristiques de bande de roulement correspondantes au préambule de la revendication 1.

La bande de roulement, conforme à l'invention, est définie par les caractéristiques de la revendication 1.

Les mesures d'aires sont réalisées sur un sol plan et dur pour cause de reproductibilité des mesures. L'aire réelle de contact de la bande de roulement avec le sol est l'aire occupée par les éléments en relief qui portent sur le sol et supportent la charge imposée par le pneumatique. L'aire occupée par les alvéoles est l'aire où il n'y a pas contact entre le sol et la bande de roulement, ce manque de contact étant dû à la présence des alvéoles seules.

En effet, la bande de roulement peut être éventuellement pourvue de rainures longitudinales et/ou transversales en vue de conférer à celle-ci une certaine flexibilité dans le sens longitudinal et/ou dans le sens axial du pneumatique, mais l'aire occupée par ces rainures où il n'y a pas contact entre la bande de roulement et le sol n'est pas prise en compte.

Les alvéoles conformes à l'invention peuvent avoir une profondeur constante qui est alors la profondeur maximale. Il est cependant avantageux que les alvéoles de la bande de roulement aient une profondeur variable de sorte que les éléments en relief délimitant les alvéoles dans le sens circonférentiel aient leurs parois d'attaque plus profondes que leurs parois de fuite, la hauteur des parois de fuite pouvant par ailleurs être nulle. Le remplissage des alvéoles par le sable se fait alors de manière progressive et plus complète. La profondeur maximale des alvéoles est avantageusement comprise entre 20 % et 80 % de l'épaisseur de la bande de roulement, c'est-à-dire l'épaisseur du caoutchouc au dessus de l'armature de sommet.

Vues sur la surface de la bande de roulement, les alvéoles ont de préférence une forme de quadrilatère, ayant au moins deux côtés parallèles entre eux, et parallèles à l'axe de rotation du pneumatique.

Quant à la surface constituant le fond des alvéoles, elle est préférentiellement courbe, dans le sens transversal, la courbure étant tournée vers le sol.

Afin d'augmenter l'efficacité des alvéoles, la bande de roulement a préférentiellement une forme concave, c'est-à-dire une courbure transversale telle que le centre de courbure soit à l'extérieur du pneumatique. Une telle concavité permet le moindre écoulement du sable, à l'avant de l'ellipse de contact, vers les bords de la bande de roulement et ainsi un meilleur remplissage des alvéoles.

La description qui va suivre en regard du dessin annexé, donné à titre d'exemple non limitatif, fera mieux comprendre comment l'invention peut être réalisée.

La figure 1 est une vue schématique d'une bande de roulement conforme à l'invention.

La figure 2 est une vue en coupe longitudinale suivant la ligne AA' de la figure 1.

La figure 3 est une vue en coupe transversale suivant la ligne BB' de la figure 1 et suivant un mode préférentiel de la surface du fond des alvéoles.

La figure 4 représente une bande de roulement concave suivant un mode préférentiel.

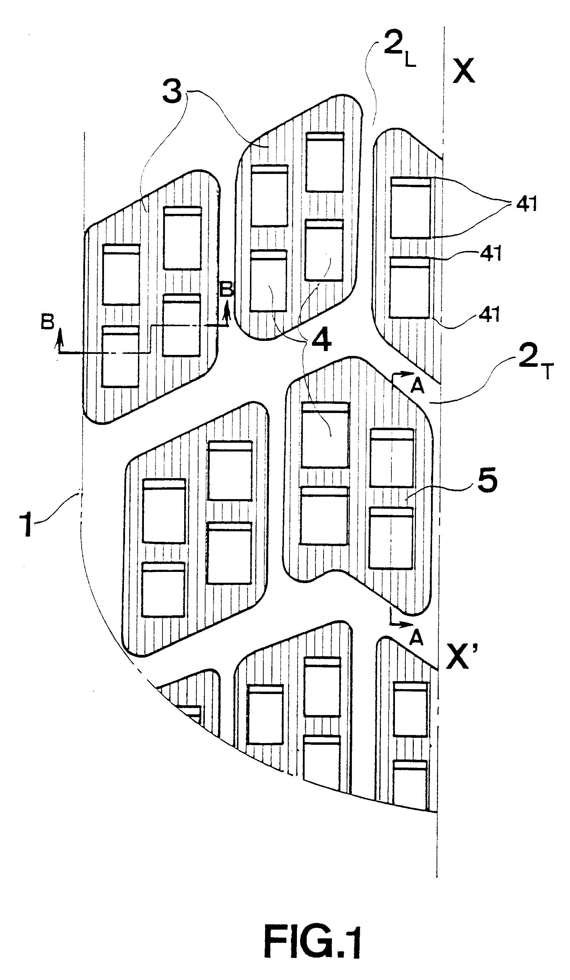

La figure 1 représente sensiblement le quart de la surface de contact entre un sol dur et plan et la bande de roulement d'un pneumatique 7.50-16 X. La bande de roulement (1) est munie de portions (2L) de rainures longitudinales, de faible largeur (5 mm) et de rainures transversales (2T) dont la trace est en zig-zag et dont la largeur est supérieure à celle des rainures longitudinales (2L). Ces rainures (2L, 2T) délimitent entre elles des éléments en relief ou blocs de gomme (3) qui sont pourvues d'alvéoles (4). Ces alvéoles (4) se présentent, en volume, sous la forme de coins prismatiques et vues en plan sous la forme de rectangles, dont deux côtés (41) sont parallèles à l'axe de rotation du pneumatique. Comme montré, ces alvéoles sont fermées, sans aucune possibilité pour le sable ou matériau sablonneux, qui les a remplies à l'entrée de la surface de contact, de s'échapper lors du passage des alvéoles (4) dans la surface de contact entre le sol et la bande de roulement.

L'aire occupée par les alvéoles (4) est égale, dans l'exemple décrit à 35 % de l'aire réelle de contact sur le sol plan (partie hachurée). Ainsi, dans la surface de contact du pneumatique avec le sol sablonneux, on augmente considérablement la surface de frottement entre les grains de matériau contenus dans les alvéoles (4) et les grains de matériau constituant le sol, alors que la surface de frottement entre le caoutchouc de la bande de roulement (1) et les grains de matériau constituant le sol est diminuée d'autant, ce qui conduit à une meilleure adhérence de la bande de roulement sur le matériau sablonneux.

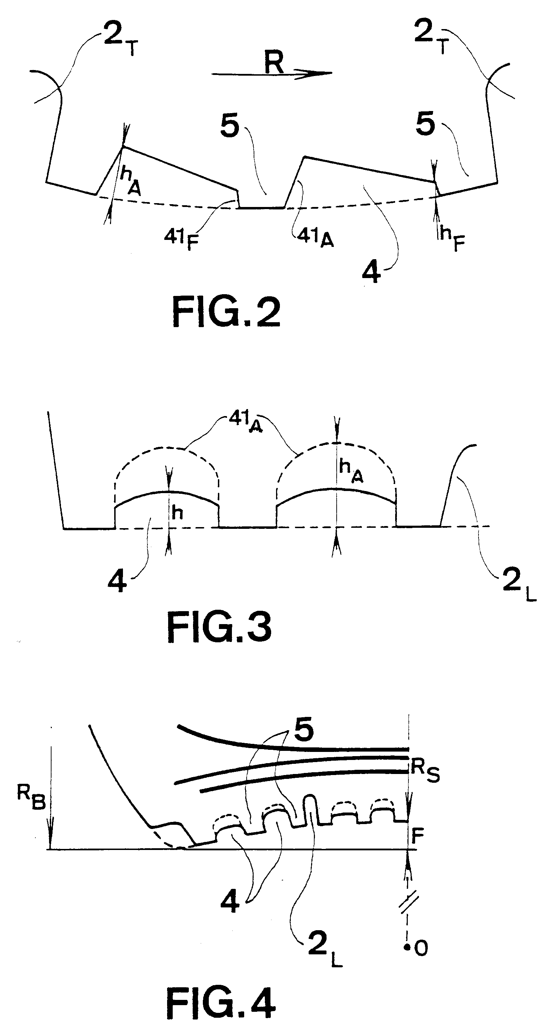

Sur la figure 2, les avéoles (4) ont une profondeur (h) variable, et croissante d'une valeur (hF) à une valeur (hA). Si la flèche (R) représente le sens de rotation du pneumatique, la paroi (41A) de l'alvéole (4), correspondante à la face d'attaque de l'élément en relief (5), c'est-à-dire la face de l'élément en relief qui pénètre la première dans l'ellipse de contact, a une hauteur (hA), mesurée perpendiculairement à la surface de la bande de roulement (1), supérieure à la hauteur (hF) de la paroi (41 F) de l'élément en relief (5). La hauteur (hF) est faible et généralement inférieure à 2 mm, quelle que soit la dimension du pneumatique, et elle peut être nulle. Quant à la hauteur (hA), elle est égale à 25 % de l'épaisseur de la bande de roulement et dans le cas décrit à 4 mm.

Sur la figure 3 est montrée en coupe suivant la ligne transversale BB'de la figure 1 une solution préférentielle concernant le fond des alvéoles. Ce fond est une surface courbe dont la courbure est tournée vers le sol, c'est-à-dire une surface dont les centres de courbure sont situés à l'extérieur du caoutchouc de la bande de roulement (1), ce qui a pour effet d'augmenter la pression de contact entre les grains de matériau sablonneux se trouvant emprisonnés dans les alvéoles (4).

La figure 4 représente une demi-coupe transversale d'un pneumatique, munie d'une bande de roulement dont la surface est concave, le centre de courbure (0) étant à l'extérieur du pneumatique. La concavité, mesurée par la distance F, différence entre le rayon RB des bords de la bande de roulement (1) mesuré par rapport à l'axe de rotation du pneumatique, et le rayon RS du centre de la bande de roulement mesurée par rapport au même axe, rapportée au rayon (RS), est égale à 0,03 et dans tous les cas supérieure à 0,012 . Autrement dit la concavité, mesurée par le rapport

$$\frac{RB - RS}{RS},$$

est au moins égale à 0,012.

Le pneumatique 7.50-16 X décrit a fait l'objet d'essais sur sable, sous une charge de 520 kg, gonflé à une pression de 0,8 bars. Deux pneumatiques identiques sont montés sur l'essieu moteur d'un véhicule "tout terrain", freiné de manière à obtenir un glissement entre les pneumatiques et le sable pouvant être compris entre 5 et 400 %. Si l'on mesure l'effort X développé par les pneumatiques, ceux dont les bandes de roulement sont munies d'alvéoles présentent par rapport aux mêmes pneumatiques sans alvéoles sur les bandes de roulement un gain moyen de 15 %, ce gain moyen passant à 20 % si la bande de roulement est concave comme décrite précédemment.

## Revendications

1. Bande de roulement pour pneumatique, à armature de carcasse radiale et à armature de sommet composée d'au moins deux nappes de câbles ou fils faisant avec la direction circonférentielle des angles faibles et destinée à un roulage sur du sable ou des sols sablonneux, munie d'alvéoles (4) fermées dont la profondeur maximale est au moins égale à 10 % de l'épaisseur de la bande de roulement (1), caractérisée en ce que l'aire occupée par ces alvéoles (4) est au moins égale à 20 % de l'aire réelle de contact de la bande de roulement (1) avec un sol dur et plan, le pneumatique étant monté sur sa jante normale d'utilisation, portant la charge recommandée et étant gonflé à la pression correspondante recommandée pour roulage sur sable, et en ce que les alvéoles ont une profondeur (h) variable, les faces d'attaque (41A) des éléments en relief (5) délimitant circonférentiellement les alvéoles (4) ayant une hauteur (hA) supérieure à la hauteur (hF) des faces de fuite (41F) des éléments en relief (5).

2. Bande de roulement selon la revendication 1, caractérisée en ce que la hauteur (hF) est nulle et en ce que la hauteur (hA) est comprise entre 20 % et 80 % de l'épaisseur de la bande de roulement (1).

3. Bande de roulement selon l'une des revendications 1 à 2, caractérisée en ce que le fond des alvéoles (4) est une surface courbe transversalement, les centres de courbure de cette surface étant située à l'extérieur du caoutchouc de la bande de roulement (1).

4. Bande de roulement selon l'une des revendications 1 à 3, caractérisée en ce que, vues en plan sur la surface de la bande de roulement (1), les alvéoles (4) ont une section quadrilatère, dont deux côtés (41) sont parallèles entre eux et parallèles à l'axe de rotation du pneumatique.

5. Bande de roulement selon l'une des revendications 1 à 4, caractérisé en ce que la surface est transversalement concave, la concavité, mesurée par le rapport

$$\frac{RB - RS}{RS}$$

étant au moins égale à 0,012, RS et RB étant les rayons respectifs du centre et des bords de la bande de roulement par rapport à l'axe de rotation du pneumatique.

## Claims

1. A tread for tyres with radial carcass reinforcement and crown reinforcement formed of at least two plies of cables or cords forming small angles with the circumferential direction and intended for travel on sand or sandy soils, provided with closed cells (4) having a maximum depth at least equal to 10% of the thickness of the tread (1), characterised in that the area occupied by these cells (4) is at least equal to 20% of the actual area of contact of the tread (1) with hard flat ground, the tyre being mounted on its normal service rim, bearing the recommended load and being inflated to the corresponding pressure recommended for travel on sand, and in that the cells have a variable depth (h), the leading faces (41A) of the elements in relief (5) which circumferentially define the cells (4) having a height (hA) greater than the height (hF) of the trailing faces (41F) of the elements in relief (5).

2. A tread according to Claim 1, characterised in that the height (hF) is zero and in that the height (hA) is between 20% and 80% of the thickness of the tread (1).

3. A tread according to one of Claims 1 to 2, characterised in that the bottom of the cells (4) is a transversely curved surface, the centres of curvature of said surface being located outside the rubber of the tread (1).

4. A tread according to one of Claims 1 to 3, characterised in that, seen in plan view on the surface of the tread (1), the cells (4) have a quadrilateral cross-section, two sides (41) of which are parallel to each other and parallel to the axis of rotation of the tyre.

5. A tread according to one of Claims 1 to 4, characterised in that the surface is transversely concave, the concavity, measured by the ratio

$$\frac{RB - RS}{RS}$$

being at least equal to 0.012,
RS and RB being the radii of the centre and edges, respectively, of the tread with respect to the axis of rotation of the tyre.

## Patentansprüche

1. Lauffläche für Luftreifen, mit radialer Karkassenarmatur und mit Kronenarmatur, die aus wenigstens zwei Draht- oder Fasernschichten gebildet wird, die mit der Umfangsrichtung geringe Winkel bilden, und die für ein Fahren auf Sand oder sandförmigen Böden bestimmt ist, mit geschlossenen Hohlräumen (4) deren maximale Tiefe wenigstens gleich 10 % der Dicke der Lauffläche (1) ist, dadurch gekennzeichnet, daß die von den Hohlräumen (4) besetzte Fläche wenigstens gleich 20 % der tatsächlichen Kontaktfläche der Lauffläche (1) mit einem harten und ebenen Boden ist, wobei der Luftreifen, der auf seiner normalen Felge montiert ist, die empfohlene Last trägt und auf den entsprechenden, für ein Fahren auf Sand empfohlenen Druck aufgepumpt ist, und daß die Hohlräume eine unterschiedliche Tiefe h aufweisen, wobei die Angriffsseiten (41A) der Vorsprungelemente (5) umfangsmäßig die Hohlräume (4) begrenzen, die eine Höhe (hA) haben, die größer ist als die Höhe (hF) der Ausgangs- oder Hinterseiten (41F) der Vorsprungelemente (5).

2. Lauffläche nach Anspruch 1, dadurch gekennzeichnet, daß die Höhe (hF) gleich Null ist und daß die Höhe (hA) zwischen 20 % und 80 % der Dicke der Lauffläche (1) beträgt.

3. Lauffläche nach Anspruch 1 oder 2, dadurch gekennzeichnet, daß der Boden der Hohlräume (4) eine querverlaufende gekrümmte Oberfläche ist, wobei die Krümmungszentren dieser Oberfläche außerhalb des Gummis der Lauffläche (1) angeordnet sind.

4. Lauffläche nach einem der Ansprüche 1 bis 3, dadurch gekennzeichnet, daß in Draufsicht auf die Oberfläche der Lauffläche (1), die Hohlräume (4) einen viereckigen Querschnitt aufweisen, von dem zwei Seiten (41) untereinander parallel sind, und parallel zur Drehachse des Luftreifens verlaufen.

5. Lauffläche nach einem der Ansprüche 1 bis 4, dadurch gekennzeichnet, daß die Oberfläche im Querschnitt konkav ist, wobei die Konkavität, die durch das Verhältnis (RB - RS)/RS gemessen wird, wenigstens gleich 0,012 ist, wobei RS und RB die jeweiligen Radien des Zentrums bzw. der Ränder der Lauffläche bezüglich der Drehachse des Luftreifens sind.

FIG.1

**FIG.2**

**FIG.3**

**FIG.4**